# EUROPEAN PATENT APPLICATION

(11) **EP 4 822 072 A1**
(43) Date of publication of application: **14.10.2026**
(21) Application number: 26169263.6
(22) Date of filing: 30.03.2026
(51) Int. Cl.: D04H 1/02, D04H 1/4266, D04H 1/4291, D04H 1/4342, D04H 1/435, D04H 1/541, B32B 5/26, A41D 31/06, A41D 31/102, A41D 31/12

(54) **IMPROVED THERMAL PADDING FOR GARMENTS AND METHOD FOR ITS MANUFACTURE**

(30) Priority: 07.04.2025 IT 202500007392
(71) Applicant: Imbotex S.r.l., 35013 Cittadella (Padova) (IT)
(72) Inventor: Carniello, Stefania, 35013 Cittadella (Padova) (IT)
(74) Representative: Farago-Schauer, Peter Andreas

(57) **Abstract**

The present invention pertains to a method for providing a padding comprising the following steps: mixing fibers that compose a first layer with staples of a two-component polymer with a low-melting exterior, obtaining a first mixed product; mixing the fibers that compose a second layer with staples of a two-component polymer with a low-melting exterior, obtaining a second mixed product; depositing said first mixed product to form a first fiber mat; depositing said second mixed product to form a second fiber mat; carding said first mat, obtaining a first ply, which is uniformly mixed and carded; carding said second mat, obtaining a second ply, which is uniformly mixed and carded; layering said first ply and said second ply, obtaining a primary semifinished product; thermally bonding said primary semifinished product to form said padding, melting and fusing together at least the outer part of said two-component polymer staples.

## Description

The present invention relates to an improved thermal padding, particularly for technical clothing for outdoor activities.

The invention also has as an object to provide a method for manufacturing such padding.

Nowadays, in the field of clothing, particularly technical clothing for so-called "outdoor" activities, i.e., activities performed outdoors, products with high thermal insulation capacity from the external environment and high breathability are increasingly being used.

In general, the human body produces heat through exclusively physiological phenomena, regardless of the clothing worn and the temperature of the external environment.

During sports activities, athletes perform intense muscular activities that cause their body temperature to rise, accompanied by more or less profuse sweating.

The evaporation of this sweat absorbs heat, maintaining the body temperature within the ideal range for the athlete.

It is therefore clear how important clothing is for the average user, and even more so for athletes, in promoting the dispersion of vaporized sweat, which invades the microenvironment between the body and the clothing covering it, so as not to slow down the thermoregulation process.

Furthermore, even when muscle activity is low, such as during low-intensity activities or during a break, the body continues to disperse water, albeit in much smaller quantities.

"Perspiratio insensibilis", which can be translated into English as "insensible perspiration," is a physiological process that consists of the continuous and imperceptible loss of small amounts of water from the skin, mucous membranes, and respiratory tract. This phenomenon, which is entirely physiological and continuous, is a mechanism that allows the body to disperse heat continuously, contributing to the process of thermoregulation and, in the case of transepidermal water loss, allowing it to maintain an adequate level of skin hydration.

Modern technical clothing must therefore guarantee at the same time sufficient breathability to comfortably cope with high-intensity activities while remaining a barrier against excessive heat loss, to prevent the athlete from feeling an unpleasant sensation of cold when physical activity ceases.

For these purposes, so-called thermal padding is now widely known and used.

The term "thermal padding," also known as "thermal wadding," refers to materials, whether synthetic or natural, that are designed to insulate against the cold and make padded garments soft and fluffy.

In this description, the term "synthetic origin" refers to a product obtained through artificial synthesis, generally from petroleum and its derivatives.

In this description, the term "natural origin" refers to a product derived from the processing of raw materials obtained from plant cultivation or from animal hair.

Padding made from synthetic fibers, unlike padding made from natural fibers, is very durable, easy to care for and wash, and generally more economical.

Such synthetic padding is generally used in technical clothing to provide better thermal insulation without limiting the garment's breathability.

The ideal technical garment for winter sports must have maximum vapor permeability, minimum water absorption, and maximum insulating power.

The thermal padding currently available, although widespread and appreciated, has certain limitations.

One important limitation is imposed by the increasingly demanding market, where athletes, in order to improve their performance, are constantly looking for lighter clothing with better technical performance than existing garments.

In particular, in situations of physical activity at particularly low temperatures, known thermal padding is not able to sufficiently reduce heat loss from the body, usually failing to prevent the user from feeling cold.

In fact, known padding is structured either to promote the transfer of moisture to the outside, removing some of the heat with it, or to promote heat retention, which often also limits the ability to transfer moisture to the outside.

From a commercial point of view, products with a low ecological footprint are also viewed more positively than garments with similar performance but produced in a more polluting manner.

During the production phase, it is therefore advantageous to use recycled and/or recyclable materials as much as possible.

A possible environmentally beneficial solution is, where possible, the recovery and recycling of waste materials or materials destined to become waste.

The purpose of this invention is to create an improved thermal padding and a method for producing it, which are capable of improving the state of the art in one or more of the above aspects.

In particular, within the scope of this task, one purpose of the invention is to develop an improved thermal padding capable of both transferring moisture to the outside and retaining heat more effectively than known types of thermal padding.

Another purpose of the invention is to develop an improved thermal padding that is lightweight and easy to incorporate into technical clothing such as jackets, sweaters, shirts throusers, gloves, hats, footwear, backpacks, sleeping bags, mats, and the like.

Another purpose of the invention is to develop padding and a method for its manufacture that have an environmental impact equal to or less than that of similar products of the known type.

A further purpose of the invention is to develop a method for the manufacture of thermal padding that can be obtained at least partially from waste or scraps from previous production, while presenting quality and performance characteristics comparable to those of similar products of a known type.

Furthermore, the present invention aims to overcome the drawbacks of the state of the art in a manner that is alternative to any existing solutions.

Last but not least, the invention aims to produce an improved thermal padding and a method for producing it that are highly reliable, relatively easy to implement, and competitively priced.

This task, as well as these and other purposes that will become clearer below, are achieved by a method for manufacturing padding according to one of claims 1 to 4.

Furthermore, this task, as well as these and other purposes that will become clearer below, are achieved by an improved thermal padding, particularly for technical clothing for outdoor activities according to claim 5, optionally equipped with one or more of the features of the dependent claims.

Further features and advantages of the invention will be better understood from the description of a preferred, but not exclusive, embodiment of an improved thermal padding according to the invention and the method for producing it, illustrated, by way of example and without limitation, in the accompanying figures, in which:
Figures 1 to 5 are schematic views of different stages of a method for manufacturing an improved thermal padding;
Figure 6 is an overall perspective view of a detail of an improved thermal padding;
Figures 7 to 10 are schematic views of different embodiments of the method for producing an improved thermal padding;
Figure 11 is a schematic view of a section of an improved thermal padding.

The method for producing an improved thermal padding 100 according to the invention, comprising a first layer 110 and a second layer 120, begins with the opening of the blocks containing the components of the first fibers, included in the first layer 110, and the blocks containing the components of the second fibers, included in the second layer 120.

These blocks may contain both virgin fibers, i.e., fibers derived directly from primary production, and recycled fibers.

These recycled fibers can be obtained, for example, from pre-consumer waste that has been dismantled and subjected to garnetting and/or fraying.

During the garnetting / fraying phase, a staple is obtained consisting of long and short fibers, even in the order of a few millimeters.

These long and short fibers are then compressed to form packed blocks, which are packaged in a similar way to virgin fibers.

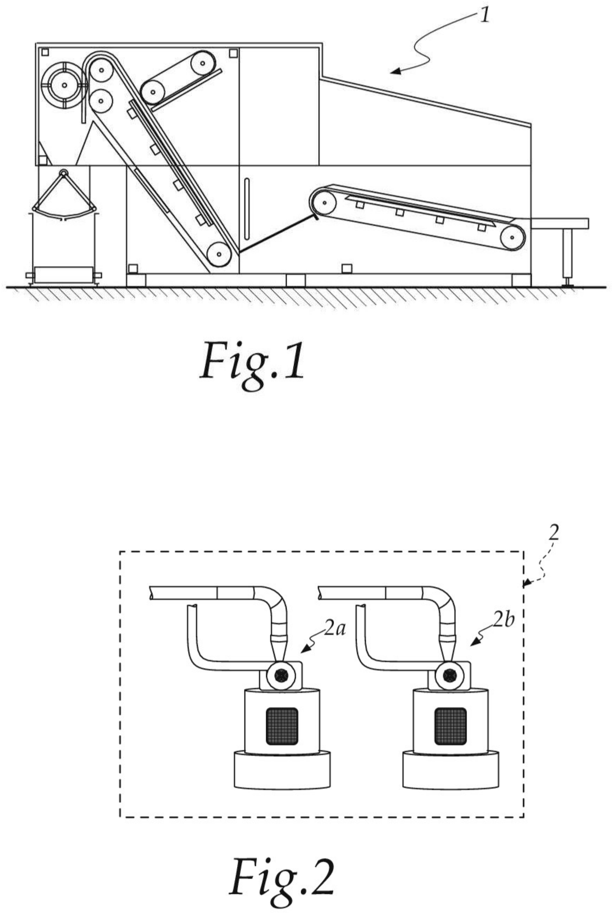

With reference to Figure 1, the blocks are opened using an opener 1, which allows the fibers of a single material to be released.

In the textile industry, the term "opening" refers to the operation of opening the fibers.

The packing phase and subsequent opening of the blocks is not necessary if the process is carried out continuously, but it is necessary if the process is carried out in steps spaced apart in time and/or space.

Similarly, in at least one other opener, not shown in the figures, two-component plastic staples with a low-melting exterior are released and weighed.

Furthermore, in other openers, not shown in the figures, other blocks of fibers necessary to compose this first layer 110 or this second layer 120 can be released and weighed.

In particular, during the opening phase, the fibers of a single material are released and become volatile again in each opener.

The proportions of these fibers are selected, by means of load cells, according to the product in the layer and the relative thickness and weight to be obtained.

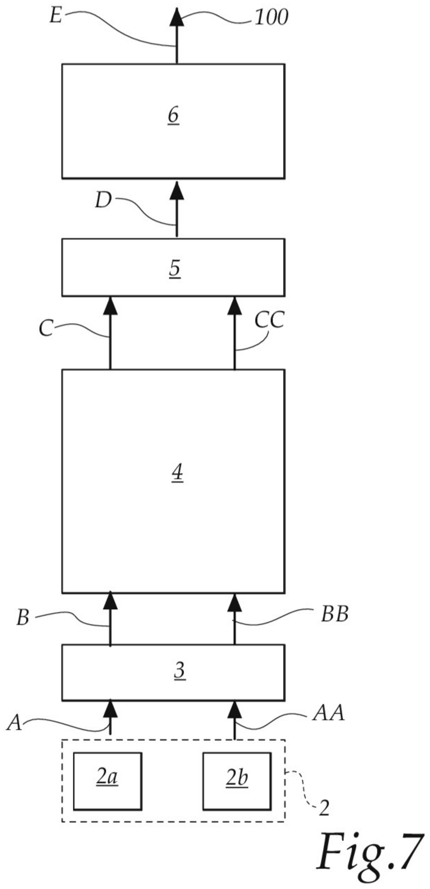

With reference to Figure 2 and Figure 7, after the opening phase, the first fibers, which make up the first layer 110, are mixed with each other and with staples of a two-component polymer with a low-melting exterior.

This operation takes place inside a first mixer 2a.

In this manner a first mixed product A is produced.

Similarly, the second fibers, which make up the second layer 120, are mixed with each other and with staples of a two-component polymer with a low-melting exterior.

This operation takes place inside a second mixer 2b.

In this manner a second mixed product AA is produced.

Advantageously, in an embodiment not shown in the figures, the first mixer and the second mixer can be integrated into a single mixer 2.

Subsequently, the first mixed product A and the second mixed product AA are distributed onto at least one first conveyor belt, not shown in the figures.

In the embodiment of the method shown in Figure 7, the first mixed product A and the second mixed product AA are distributed in parallel on a single first conveyor belt.

This operation is performed by a double volumetric tower 3, which receives the first mixed product A, which is deposited on the first conveyor belt to form a first fiber mat B.

In a similar manner, the second mixed product AA arrives at the double volumetric tower 3, where it is deposited on the first conveyor belt to form a second fiber mat BB, placed alongside the first mat B.

Advantageously, the proportions of the first mixed product A and the second mixed product AA to be collected are adjusted by the double volumetric tower 3.

The proportions between products can be adjusted, for example, by using a movable wall, which keeps the first mixed product A separate from the second mixed product AA during the operation to produce of the first mat B and the second mat BB, respectively.

In particular, the positioning of this movable wall defines the width of the first mat B and the second mat BB, and consequently their relative proportions.

Advantageously, in an embodiment not shown in the figures, there may be two single volumetric towers, each fed separately from the other with one of the first mixed product and the second mixed product.

The method then involves the carding phase of the first mat B and the second mat BB.

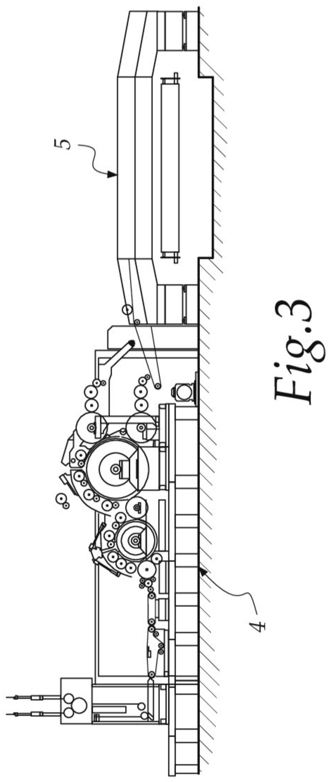

With particular reference to Figure 3 and Figure 7, the first mat B is carded by means of a carding machine 4, obtaining a first ply C, homogeneously mixed and carded.

The second mat BB is carded simultaneously and in parallel with the first mat B in carding machine 4, obtaining a second ply CC, which is homogeneously mixed and carded.

Advantageously, in an embodiment not shown in the figures, there may be two carding machines, each fed separately from the other with one between the first mat and the second mat.

The "carding" is a common operation in the textile fiber processing cycle and therefore well known to those skilled in the art, so it will not be described in greater detail.

The subsequent operations, such as "folding," "stretching," and "calendering," are also common operations to a person skilled in the art, if analyzed individually, and therefore, unless deemed necessary for a better understanding, will not be described in detail.

Again, with reference to Figure 3 and Figure 7, the first ply C and the second ply CC are subjected to folding.

More specifically, the first ply C and the second ply CC enter a folding machine 5 in parallel, where they are folded, superimposing the first ply C on the second ply CC, obtaining a primary semifinished product D with two layers.

This primary semifinished product is composed of the material previously comprising the first mixed product A and the material previously comprising the second mixed product B, in the proportions defined by the double volumetric tower 2.

This primary semifinished product D already includes all the components of the padding 100, but requires at least one fiber bonding phase in a special oven 6 to obtain a usable product.

Advantageously, before this bonding phase, the primary semifinished product D may be subjected to further processing to increase its quality.

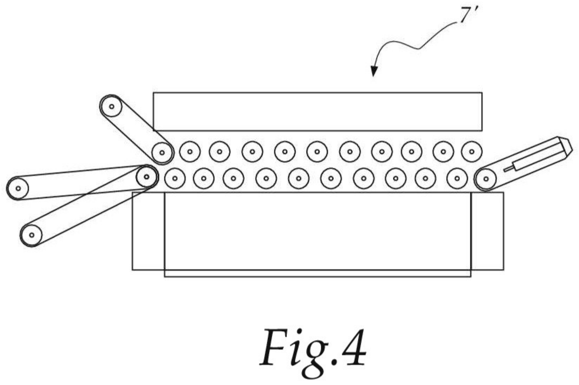

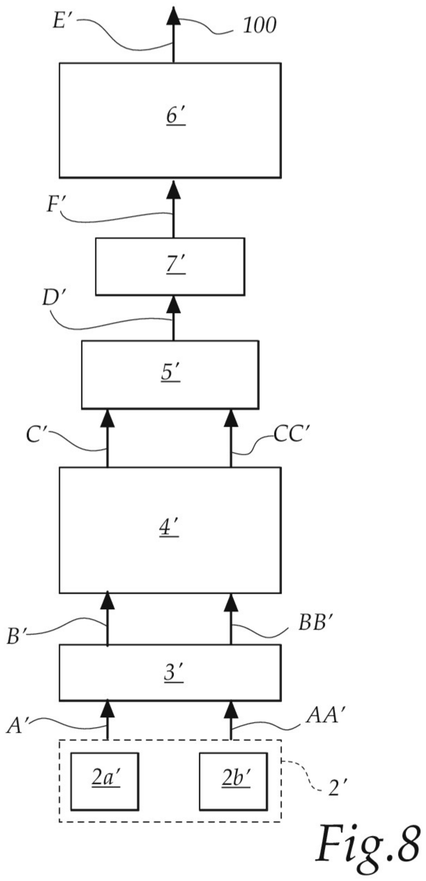

For example, with reference to Figure 4 and Figure 8, the primary semifinished product D' can be subjected to stretching before the thermo-bonding process, by means of a stretching machine 7' inserted into the production line between the folding machine 5' and the oven 6'.

The stretching machine 7' makes the semifinished product of uniform thickness, creating a secondary semifinished product F'.

More specifically, this stretching machine 7', inserted after the folding process, is used to ensure pre-cohesion, in order to make the layer more uniform and avoid significant variations in the density of the material.

Advantageously, the stretching phase allows for the creation of padding with extremely low density, approximately between 20 and 80 grams per square meter, while maintaining constantly the quality and uniformity of the layer regardless of its thickness.

In fact, any areas of the padding 100 where even part of the first layer 110 and the second layer 120 are missing would see a significant reduction in thermal insulation performance.

The term "pre-cohesion" in this description refers to a reorientation of the folded fibers.

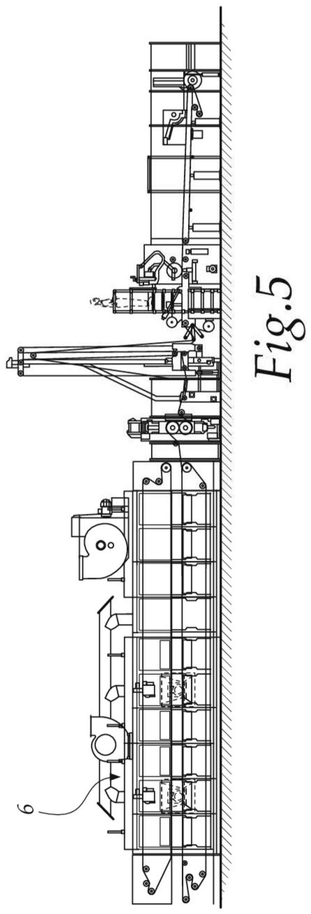

With reference to Figure 5 and Figure 7, the primary semifinished product D enters a thermo-bonding oven 6.

With reference to Figure 8, the secondary semifinished product F' enters a thermo-bonding oven 6'.

The thermo-bonding of the primary semifinished product D produces a first bonded semifinished product E.

With reference to Figure 8, the thermo-bonding of the secondary semifinished product F' produces a second bonded semifinished product E'.

Each of this first bonded semifinished product E and second bonded semifinished product E' can be used as padding 100, depending on the specific intended use of this padding 100.

More specifically, during the heat-bonding phase, the outer part of the staples of a two-component polymer with a low-melting exterior is melted.

In this way, the two layers comprising the first bonded semifinished product E or the two layers comprising the second bonded semifinished product E' are welded together by a three-dimensional network of containment and union created by the re-solidification of the outer part of the polymer fibers with a low-melting point exterior.

In this manner a thermally bonded layer material is obtained.

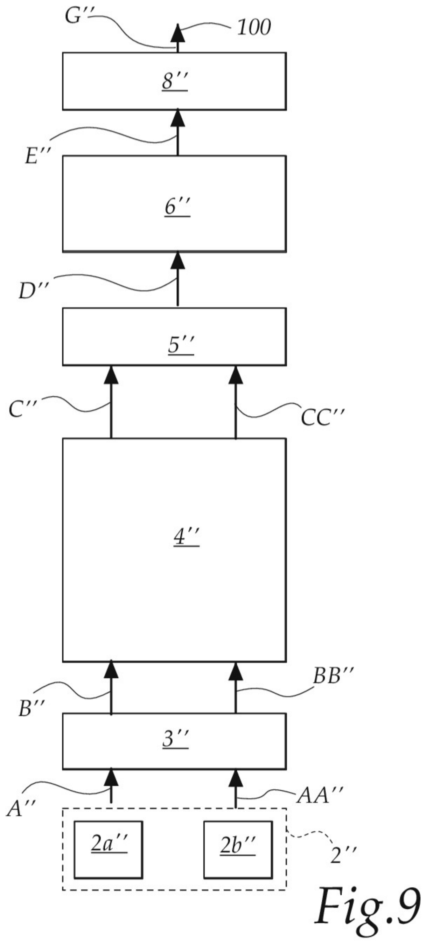

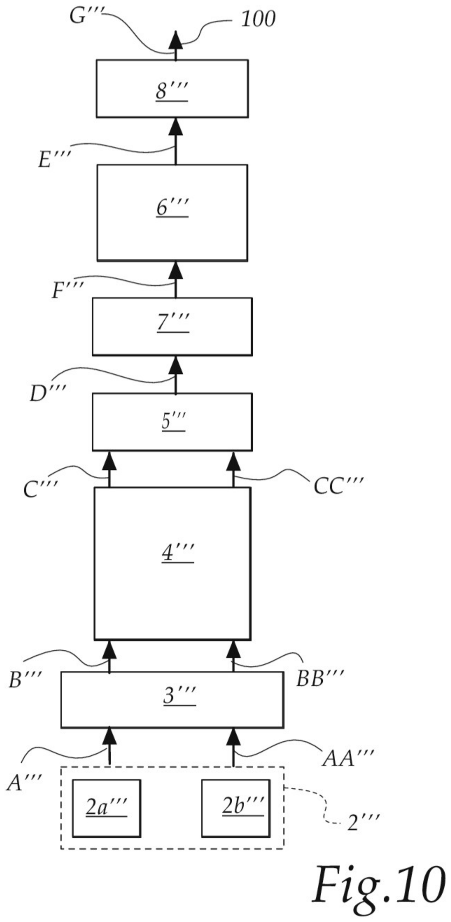

With reference to Figure 9 and Figure 10, the method of manufacturing the padding 100 may include a calendering stage performed in a calender 8", 8‴.

The main purpose of the calendering operation is to smooth the sides of one of the first bonded semifinished product E" and the second bonded semifinished product E‴, improving the homogeneity of the final product and its aesthetic appearance.

This process is generally performed hot, using a calender comprising at least two heated rolls, at a temperature between 150 and 250°C, and optionally at least two cooling rolls.

With reference to Figure 9, from the calendering of the first bonded semifinished product E" a first calendered semifinished product G" is obtained.

With reference to Figure 10, from the calendering of the second bonded semifinished product E‴ a second calendered semifinished product G‴ is obtainedS.

Each of these first calendered semifinished product G" and second calendered semifinished product G‴ can be used as padding 100, depending on the specific intended use of this padding 100.

Subsequently, the process of manufacturing the padding 100 includes a cutting phase of any of the first bonded semifinished product E', the second bonded semifinished product E", the first calendered semifinished product G" and the second calendered semifinished product G‴ described above, by means of a cutter positioned after the oven 6, 6', 6", 6"'.

Subsequently, the process of producing padding 100 may include a phase of winding the material coming from one of the previous phases.

More specifically, this winding stage arranges the material into rolls by means of a winder, positioned downstream of the oven 6, 6', 6", 6‴.

In addition, one or more compensators may be placed between the winder and the oven 6, 6', 6", 6"', designed to accumulate a reduced amount of material at the exit from one or more of the working stages described above in a buffer zone.

This compensation phase prevents stretching of the material, for example during the cutting phase and/or the replacement of the roll in the winder.

A method structured in this way also allows for the production of ultra-light padding 100, i.e., with densities reduced to 20 grams per square meter, while maintaining the uniformity and homogeneity characteristics typical for padding with higher densities.

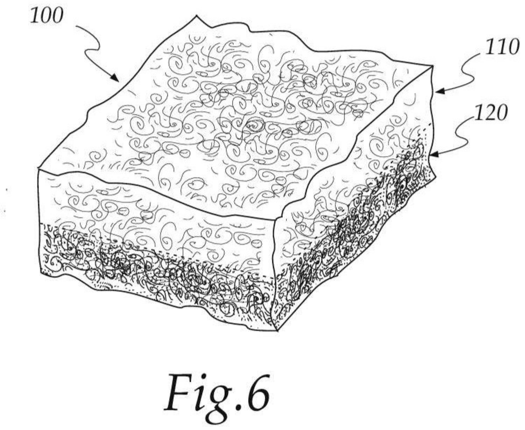

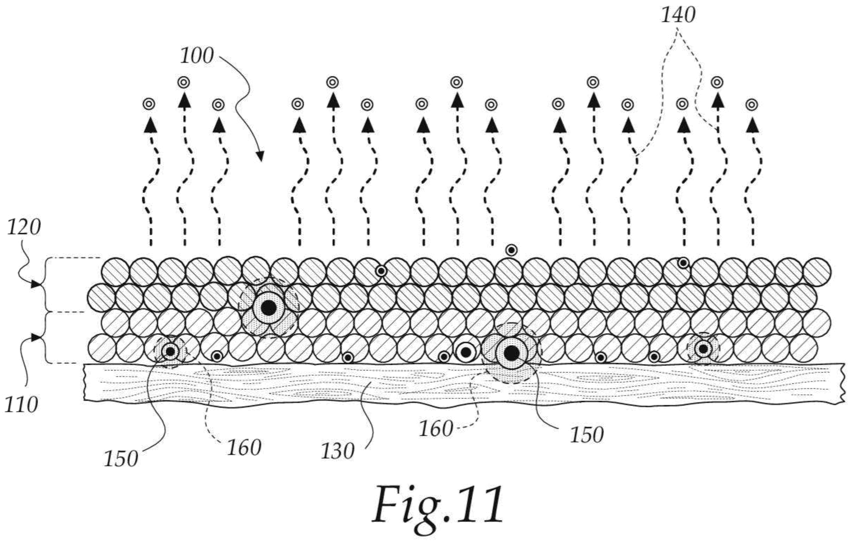

With reference to Figure 6 and Figure 11, the thermal padding according to the invention, indicated globally with the number 100, is composed or exclusively made of two layers 110 and 120, superimposed on each other and in mutual contact, substantially over their entire length.

According to the invention, there is a first layer 110, which includes first fibers with thermoregulating properties.

Thermoregulating generally means a fabric capable of maintaining the ideal temperature of the human body, usually indicated as approximately 36.8°C, by conserving and distributing heat or expelling it from the space between the skin and the garment depending on body temperature and perspiration.

Furthermore, according to the invention, there is a second layer 120 containing second fibers, different from those of the first layer 110, and with distinct properties compared to the properties of the first layer 110: thermally insulating and/or breathable.

"Thermally insulating" generally refers to a fabric designed to create a layer of thermal insulation around the body in cold, windy, or humid conditions, maintaining the heat produced by physiological processes between the body and the fabric itself.

"Breathable" generally refers to a fabric designed to reduce discomfort caused by the body's sweat production, exploiting the capillary properties of the fibers it is made of.

In other words, the fibers of the fabric collect the sweat produced by the body and keep it on their surface, channeling it from the surface of the fabric subject to higher relative humidity to the surface with lower relative humidity.

In this way, sweat can evaporate more easily into the external environment.

This padding 100 can be used in a garment 200 with either the first layer 110 or the second layer 120 facing the body of a user 130, and the other of the first layer 110 and the second layer 120 facing the outside.

Advantageously, the first fibers are selectively chosen from a group of fibers including graphene, silk, polypropylene, polyacrylate, meta-aramid, polyester, polylactide, and fibers combined with mineral substances, or mixtures thereof.

More specifically, the first fibers may be composed of only one of the materials just introduced, or of a mixture of these materials, in various proportions, some of which are indicated by way of example in the following table and described in more detail in the following paragraphs.

As previously described, a certain amount of a two-component polymer staples with a low-melting point is added to these first fibers, the proportions of which, generally between 10 and 25% of the weight value of the single layer, are indicated in more detail, again by way of example, in the table below.

| | Composition of first layer 110 |
|---|---|
| First embodiment | • 20-45% silicon-coated conjugated hollow polyester |
| | • 20-45% polypropylene |
| | • 10-25% thermally bonding two-component polyester staple |
| Second embodiment | • 20-45% silicon-coated conjugated hollow polyester |
| | • 20-45% polyacrylate (or other acrylic fiber) |
| | • 10-25% thermally bonding two-component polyester staple |
| Third embodiment | • 20-45% fire-retardant polyester |
| | • 5-85% meta-aramid (or modacrylic) staple |
| | • 10-25% fire-retardant thermally bonding two-component polyester staple |
| Fourth embodiment | • 20-40% silicon-coated polyester |
| | • 20-45% polyester |
| | • 10-25% thermally bonding two-component polyester staple |
| Fifth embodiment | • 30-45% polyester with minerals |
| | • XX% silk |
| | • 20-45% polyester |
| | • 10-25% thermally bonding two-component polyester staple |
| Sixth embodiment | • 20-80% wool |
| | • XX% silk |
| | • 20-40% polyester |
| | • 10-25% thermally bonding two-component polylactic acid staple |

NOTE: The values indicated refer to the percentage by weight of the specific material in the total of the first layer 110.

Each of the materials used in a specific embodiment of this first layer 110 is chosen based on certain characteristic properties.

For example, graphene, which is not indicated in the compositions presented in this text, is an excellent heat conductor: fibers with graphene allow a uniform temperature distribution throughout the fabric, which is useful in both cold and hot conditions.

Furthermore, graphene has bacteriostatic properties, i.e., it inhibits the proliferation of bacteria and microorganisms, reducing unpleasant odors.

In addition, graphene helps to dissipate electrostatic charges, reducing the feeling of static electricity typical of some synthetic fabrics.

Conveniently, the use of graphene improves the mechanical strength of the fibers with which it is combined, making them more durable and less prone to wear and tear.

Furthermore, silk is an excellent insulator: it retains heat in winter and stays cool in summer thanks to its ability to absorb and release moisture.

In fact, silk can absorb up to 30% of its weight in moisture without feeling wet.

This characteristic helps to keep the skin dry, reducing the proliferation of bacteria and unpleasant odors.

Advantageously, the polypropylene fiber has the lowest heat transfer coefficient and the greatest insulating power compared to all other textile fibers normally used in padding.

In addition, polypropylene is hydrophobic and has high water vapor permeability, which ensures rapid moisture transfer through the padding and therefore greater breathability as compared to other materials of equal density.

In particular, the low thermal transmission coefficient of the polypropylene fiber reduces the loss of body heat in cold environments compared to other fibers.

Furthermore, polyacrylate is a polymer with high water absorption, which allows to keep excess moisture away from the body, allowing for more comfortable wear.

Moreover, by absorbing water vapor emitted by the body, the polyacrylate fiber generates heat through the enthalpy of condensation (in other words, the latent heat of water vapor is released to the body through the condensation of vapor in the fiber).

In particular, a garment made with a thermal padding perfected according to the invention, comprising a first layer 110 containing at least partly polyacrylate fiber, keeps the body significantly warmer and drier than other garments produced with different types of padding and using other fibers.

Furthermore, polyester is a synthetic fiber generally derived from recycled materials, with the main characteristics of strength, elasticity, and water repellency.

Currently, the type of polyester most commonly used for fabrics is PET (polyethylene terephthalate), often derived from the recycling of plastic bottles or other waste that would otherwise end up in the sea, also known as "OBP," which stands for "Ocean Bound Plastic."

More specifically, the polyester fibers used in the fabric can be of the silicon coated (also called siliconized) conjugated hollow polyester type.

More specifically, this technology features crimped fibers, hence the term "conjugated," which have greater resilience and a more consistent volume over time than linear fibers.

These fibers also have a hollow cross-section to retain air inside them, improving their insulating and thermoregulatory properties and further reducing the density of the material.

Furthermore, the siliconized polyester, as treated with silicon, has good water-repellent properties and makes the fibers smoother and softer.

Advantageously, the polyester fibers used in the invention can be made using the additive commercially known as "CiCLO^{®}."

This technology increases the biodegradability of synthetic fibers and reduces their ecological footprint, especially with regard to microplastic pollution.

Furthermore, the polyester fibers used in the invention can be obtained using "PUR-FILL^{®}" technology, i.e., by recovering them from polyester fabric processing waste.

Optionally, the polyester may contain thermoreactive minerals, which allow the fibers to absorb and store electromagnetic emissions, or energy, from the human body, subsequently releasing them back to the body in the form of heat.

"Thermoreactive minerals" natural minerals are intended, for example of volcanic origin, of microscopic size, which are activated on contact with body heat and convert the dissipated energy into infrared rays.

In particular, these fibers reflect far infrared rays and are therefore also called "FIR," from the English "Far InfraRed."

In this way, the infrared rays act as catalysts for natural biological processes, promoting an increase in microcirculation oxygen levels and maintaining a more balanced temperature during physical activity.

Some commercial names by which these fibers are known are Celliant^{®} and Lavatech.

Furthermore, meta-aramid is a high-performance synthetic fiber belonging to the aramid family (aromatic polyamides).

This fiber is known for its high thermal resistance, intrinsic fire retardancy, and chemical resistance, characteristics that make it ideal for applications in extreme environments.

In addition, this fiber is also highly resistant to solvents, acids, and bases, and has excellent resistance to atmospheric agents and UV rays, with a lower tendency to degrade than other synthetic fibers.

Also the modacrylic fiber, a modified acrylic fiber, also has characteristics similar to meta-aramid fibers, albeit with inferior properties.

Furthermore, PLA, or polylactic acid, is a polymer obtained from renewable sources such as corn, sugar cane, and beetroot. It is distinguished by its biodegradability, mechanical strength, and environmental compatibility.

Advantageously, the production of PLA generates fewer CO₂ emissions than traditional polymers, such as polyester.

In addition, polylactic acid can degrade naturally under industrial composting conditions, transforming into water, carbon dioxide, and biomass.

In the form of textile fiber, the PLA is lightweight and breathable, with a silk-like effect, yet it does not easily absorb moisture, promoting quick drying and better sweat management than other fibers.

It also has natural antibacterial properties, reducing the proliferation of microbes and unpleasant odors.

The combination of the characteristics of the materials described above makes the first layer 110 suitable for maintaining a state of well-being, promoting sweat evaporation and distributing heat evenly.

Advantageously, the second fibers are selectively chosen from a group of fibers comprised from cellulose-based fibers such as hemp and cotton, linen or flax, but also bamboo, polylactide, silk, and wool from a variety of animals, such as camel, yak, sheep, goat, alpaca, Angora rabbit, or mixtures thereof.

More specifically, the second fibers may be composed of only one of the materials just introduced, or of a mixture of these materials, in various proportions, some of which are indicated by way of example in the following table and described in more detail in the following paragraphs.

As previously described, a certain amount of the two-component polymer staples with a low-melting point is added to these second fibers, the proportions of which, generally between 10 and 25% of the weight value of the single layer, are indicated in more detail, again by way of example, in the following table.

| | Composition of second layer 120 | |
|---|---|---|
| First embodiment | | • 10-80% wool |
| | | • 20-60% polyester staple |
| | | • 10-25% thermally bonding two-component polyester staple |
| Second embodiment | | • 10-80% plant-based fibers (linen / cotton) |
| | | • 20-60% polyester staple |
| | | • 10-25% thermally bonding two-component polyester staple |
| Third embodiment | | • 20-80% thermoreactive mineral-containing polyester staple |
| | | • 20-60% polyester staple |
| | | • 10-25% thermally bonded two-component polyester staple |
| Fourth embodiment | | • 40-85% acrylic fiber staple |
| | | • 20-40% fire-retardant polyester staple |
| | | • 20-40% meta-aramid or modacrylic staple |
| | | • 8-15% thermally bonding two-component polyester staple |
| Fifth embodiment | | • 20-40% siliconized polyester |
| | | • 20-45% conjugated hollow polyester |
| | | • 10-25% thermally bonding tow-component polyester staple |

NOTE: The values indicated refer to the percentage by weight of the specific material in the total weight of the second layer 120

Each of the materials used in a specific embodiment of this second layer 120 is chosen based on certain characteristic properties.

For example, wool is a sustainable material for the environment and the animal, as shearing or combing an animal is primarily beneficial for the animal itself and secondarily generates income for the farmer by adding value to what would otherwise be waste material.

In particular, ixn addition to the environmental factor, wool in clothing has the following main characteristics:
- comfort, as the warmth of wool creates a cozy and pleasant feeling of warmth;
- moisture regulation, as wool has the intrinsic ability to absorb moisture, thus leaving the body warm and dry;
- insulation, as the fiber has a high capacity to heat up and retain heat; even when physical activity ceases, the garment tends to remain warm.

Furthermore, fibers made from hemp are hollow and hygroscopic, a combination of characteristics that makes for a breathable and thermally insulating material, perfect for keeping you warm in winter and cool in summer.

In particular, cellulose-based fibers are textile fibers of plant origin, derived from cellulose, the main component of plant cell walls.

Among these, the most common are cotton and linen, which have high breathability and absorbency.

Advantageously, the first layer 110 comprises, in percentages by weight relative to said first layer 110, staples of a two-component polymer with a low-melting exterior between 10% and 25%.

In particular, the second layer 120 comprises, in weight percentages relative to said second layer 120, staples of a two-component polymer with a low-melting exterior between 10% and 25%.

Indicatively, the two-component fibers may be of the PLA/PLA or PET/CoPET type.

The PLA/PLA type fibers have a high-melting PLA core with a melting temperature in the order of 160°C and a low-melting coating, also in PLA, with a melting temperature in the order of 130°C.

PET/CoPET type fibers have a high-melting PET core with a melting temperature of around 250°C and a low-melting CoPET coating with a melting temperature of around 110°C.

Furthermore, the first layer 110 may comprise, in weight percentages relative to said first layer 110, staples of polyester containing thermoreactive minerals between 30% and 45%.

In addition, the second layer 120 may comprise, in weight percentages relative to said second layer 120, staples of polyester containing thermoreactive minerals between 20% and 80%.

More specifically, the padding 100 comprises siliconized conjugated hollow polyester with a linear density comprised between 2.2 decitex and 4.4 decitex.

Advantageously, the padding 100 comprises staples of a two-component polymer with a low-melting exterior, with a linear density between 2.2 decitex and 4.4 decitex.

Generally, the fibers comprising the padding 100 have a linear density substantially between 1 and 6 decitex.

Fibers such as polyester, siliconized conjugated hollow polyester, and the staple of a two-component polymer have a linear density preferably comprised between 2.2 and 4.4 decitex.

Furthermore, fibers such as polypropylene have a linear density comprised preferably between 1.4 and 2.2 decitex.

Furthermore, fibers such as polyacrylate have a linear density comprised preferably between 2.8 and 4.4 decitex.

Furthermore, fibers such as meta-aramid have a linear density comprised preferably between 1.4 and 4.4 decitex.

Finally, polyester fibers have different preferred linear densities depending on their characteristics.

For virgin, recycled, or other polyester, the preferred density is comprised between 1.4 and 4.4 decitex, for flame-retardant polyester between 3.3 and 6 decitex, for siliconized polyester between 0.9 and 6 decitex, and for polyester containing mineral substances between 1.4 and 6 decitex.

The functioning of the improved thermal padding is clear and evident from what has been described so far.

For greater clarity, with reference to Figure 11, number 140 indicates water vapor escaping from padding 100; number 150 indicates water molecules condensed and absorbed by the polyacrylate fibers, and number 160 indicates circles schematically representing the heat released by the polyacrylate fiber during condensation and absorption of water vapor.

In practice, it has been found that the invention achieves its intended purpose and objectives.

In particular, the invention has resulted in the development of an improved thermal padding capable of both transferring moisture to the outside and retaining heat more effectively than conventional thermal padding, thanks to the combination of its two layers.

In fact, the first layer absorbs moisture generated by the user's perspiration.

Furthermore, thanks to the intrinsic characteristics of some of the fibers that make it up, some embodiments of the first layer have the characteristic of releasing heat during the condensation of water vapor on the surface of these fibers.

Furthermore, the second layer, adjacent to and in contact with the first layer, promotes the dissipation of vapor while opposing the release of heat to the external environment thanks to the low thermal transmission coefficient of the fibers used in it.

The invention has resulted in the development of an improved thermal padding that is lightweight and easy to incorporate into technical clothing such as jackets, sweaters, and the like, as well as other items of body covering such as sleeping bags and the like.

For example, the process for making padding according to the invention has been used to make padding with extremely low density, up to 20-80 grams per square meter.

One advantage of the invention is that the two layers defining the padding have complementary characteristics, thus allowing the creation of so-called "double-face" or reversible garments that can be potentially used in different climatic conditions depending on which layer is selectively facing outwards.

In fact, the different characteristics between the first layer and the second layer allow for two distinct modes of use.

By positioning the first layer towards the user's body, the thermoregulating fibers are interposed between the user and the second layer.

The first layer may contain, for example, fibers that promote the recovery of heat lost through perspiration, as specified in more detail above.

The heat recovered in this way is more efficiently conserved close to the user thanks to the thermal insulation properties of the second layer.

By positioning the second layer towards the user's body, the effect of the thermoregulating fibers of the first layer is largely dissipated towards the external environment, reducing the thermal insulation of the garment.

The invention, as conceived, is susceptible to numerous modifications and variations, all falling within the scope of the inventive concept; furthermore, all details may be replaced by other technically equivalent elements.

In practice, the materials used, as well as the dimensions and shapes, may be any depending on the requirements and the state of the art.

Where the characteristics and techniques mentioned in any claim are followed by reference signs, these reference signs have been added for the sole purpose of increasing the intelligibility of the claims and, consequently, these reference signs have no limiting effect on the interpretation of each element identified by way of example by these reference signs.

## Claims

1. A method for providing a padding (100), **characterized in that** it comprises the following steps:
- mixing fibers that compose a first layer (110) with staples of a two-component polymer with a low-melting exterior, obtaining a first mixed product (A);
- mixing the fibers that compose a second layer (120) with staples of a two-component polymer with a low-melting exterior, obtaining a second mixed product (AA);
- depositing said first mixed product (A) to form a first fiber mat (B);
- depositing said second mixed product (AA) to form a second fiber mat (BB);
- carding said first mat (B), obtaining a first ply (C), which is uniformly mixed and carded;
- carding said second mat (BB), obtaining a second ply (CC), which is uniformly mixed and carded;
- layering said first ply (C) and said second ply (CC), obtaining a primary semifinished product (D);
- thermally bonding said primary semifinished product (D) to form said padding (100), melting and fusing together at least the outer part of said two-component polymer staples.

2. A method for providing a padding (100), **characterized in that** it comprises the following steps:
- mixing fibers that compose a first layer (110) with staples of a two-component polymer with a low-melting exterior, obtaining a first mixed product (A');
- mixing the fibers that compose a second layer (120) with staples of a two-component polymer with a low-melting exterior, obtaining a second mixed product (AA');
- depositing said first mixed product (A') to form a first fiber mat (B');
- depositing said second mixed product (AA') to form a second fiber mat (BB');
- carding said first mat (B'), obtaining a first ply (C'), which is uniformly mixed and carded;
- carding said second mat (BB'), obtaining a second ply (CC'), which is uniformly mixed and carded;
- layering said first ply (C') and said second ply (CC'), obtaining a primary semifinished product (D');
- stretching said primary semifinished product (D') to form a secondary semifinished product (F');
- thermally bonding said secondary semifinished product (F') to form said padding (100), melting and fusing together at least the outer part of said two-component polymer staples.

3. A method for providing a padding (100), **characterized in that** it comprises the following steps:
- mixing fibers that compose a first layer (110) with staples of a two-component polymer with a low-melting exterior, obtaining a first mixed product (A");
- mixing the fibers that compose a second layer (120) with staples of a two-component polymer with a low-melting exterior, obtaining a second mixed product (AA");
- depositing said first mixed product (A") to form a first fiber mat (B");
- depositing said second mixed product (AA") to form a second fiber mat (BB");
- carding said first mat (B"), obtaining a first ply (C"), which is uniformly mixed and carded;
- carding said second mat (BB"), obtaining a second ply (CC"), which is uniformly mixed and carded;
- layering said first ply (C") and said second ply (CC"), obtaining a primary semifinished product (D");
- thermally bonding said primary semifinished product (D") to form a first bonded semifinished product (E"), melting and fusing together at least the outer part of said two-component polymer staples;
- calendering said first bonded semifinished product (E") to form said padding (100).

4. A method for providing a padding (100), **characterized in that** it comprises the following steps:
- mixing fibers that compose a first layer (110) with staples of a two-component polymer with a low-melting exterior, obtaining a first mixed product (A‴);
- mixing the fibers that compose a second layer (120) with staples of a two-component polymer with a low-melting exterior, obtaining a second mixed product (AA‴);
- depositing said first mixed product (A‴) to form a first fiber mat (B‴);
- depositing said second mixed product (AA‴) to form a second fiber mat (BB‴);
- carding said first mat (B‴), obtaining a first ply (C‴), which is uniformly mixed and carded;
- carding said second mat (BB‴), obtaining a second ply (CC‴), which is uniformly mixed and carded;
- layering said first ply (C‴) and said second ply (CC‴), obtaining a primary semifinished product (D‴);
- stretching said primary semifinished product (D‴) to form a secondary semifinished product (F‴);
- thermally bonding said secondary semifinished product (F‴), so as to form a second bonded semifinished product (E‴), by melting and fusing together at least the outer part of said two-component polymer staples;
- calendering said second bonded semifinished product (E‴) to form said padding (100).

5. An improved thermal padding (100), particularly for technical garments for outdoor activities, comprising two layers (110, 120), which are mutually superimposed and in mutual contact, substantially over their entire extension, **characterized in that** it comprises:
- a first layer (110), comprising first fibers with thermoregulating properties;
- a second layer (120), containing second fibers with thermally insulating and/or breathable properties, said second fibers being different with respect to said first fibers,
wherein said first layer (110) is mixed with staples of a two-component polymer with a low-melting exterior,
wherein said second layer (120) is mixed with staples of a two-component polymer with a low-melting exterior,
wherein the padding (100) is fused and welded at least on the outer face of said two-component polymer staples.

6. The padding (100) according to claim 5, **characterized in that** said first fibers are selectively chosen from a group of fibers comprised between graphene, silk, polypropylene, polyacrylate, meta-aramid, polyester, polylactide and fibers combined with mineral substances, or from mixtures thereof.

7. The padding (100) according to claims 5 or 6, **characterized in that** said second fibers are selectively chosen from a group of fibers comprised between cellulose-based fibers such as hemp and cotton, linen or flax, but also bamboo, polylactide, silk and wool from a plurality of animals, such as for example camel, yak, sheep, goat, alpaca, Angora rabbit, or mixtures of said fibers.

8. The padding (100) according to one or more of the preceding claims 5 to 7, **characterized in that** it comprises, in said first layer (110) in percentages by weight with respect to said first layer (110), said two-component polymer staples with a low-melting exterior between 10% and 25%.

9. The padding (100) according to one or more of the preceding claims 5 to 8, **characterized in that** it comprises, in said first layer (110) in percentages by weight with respect to said first layer (110), polyester staples containing thermoreactive minerals between 30% and 45%.

10. The padding (100) according to one or more of the preceding claims 5 to 9, **characterized in that** it comprises, in said second layer (120) in percentages by weight with respect to said second layer (120), said two-component polymer staples with a low-melting exterior between 10% and 25%.

11. The padding (100) according to one or more of the preceding claims 5 to 10, **characterized in that** it comprises, in said second layer (120) in percentages by weight with respect to said second layer (120), staples of polyester containing thermoreactive minerals between 20% and 80%.

12. The method according to one or more of claims 1 to 4, wherein
said first fibers are selectively chosen from a group of fibers comprised between graphene, silk, polypropylene, polyacrylate, meta-aramid, polyester, polylactide and fibers combined with mineral substances, or from mixtures thereof; and/or wherein
said second fibers are selectively chosen from a group of fibers comprised between cellulose-based fibers such as hemp and cotton, linen or flax, but also bamboo, polylactide, silk and wool from a plurality of animals, such as for example camel, yak, sheep, goat, alpaca, Angora rabbit, or mixtures of said fibers.

13. The method according to one or more of claims 1 to 4 or claim 12, wherein in said first layer (110) in percentages by weight with respect to said first layer (110), said two-component polymer staples with a low-melting exterior is between 10% and 25%; and/or wherein
in said first layer (110) in percentages by weight with respect to said first layer (110), polyester staples containing thermoreactive minerals is between 30% and 45%.

14. The method according to one or more of claims 1 to 4 or claims 12 to 13,
wherein in said second layer (120) in percentages by weight with respect to said second layer (120), said two-component polymer staples with a low-melting exterior is between 10% and 25%; and/or wherein
in said second layer (120) in percentages by weight with respect to said second layer (120), staples of polyester containing thermoreactive minerals is between 20% and 80%.
